# EUROPEAN PATENT APPLICATION

(11) **EP 4 622 072 A1**
(43) Date of publication of application: **24.09.2025**
(21) Application number: 23891243.0
(22) Date of filing: 12.10.2023
(51) Int. Cl.: H02K 7/116, H02K 5/00, H02K 5/02

(54) **POWER TRANSMISSION DEVICE**

(30) Priority: 15.11.2022 JP 2022182218
(71) Applicant: Sumitomo Heavy Industries, Ltd., Tokyo 141-6025 (JP)
(72) Inventor: NAGUMO Toshiya, Yokosuka-shi, Kanagawa 237-8555 (JP); HAMADA Shimpei, Yokosuka-shi, Kanagawa 237-8555 (JP)
(74) Representative: Louis Pöhlau Lohrentz
(86) International application number: PCT/JP2023/037008
(87) International publication number: WO 2024/106085

(57) **Abstract**

A gear motor 1 includes a motor 60 and a speed reducer 70. The gear motor 1 includes a motor casing 64, a speed reducer casing 75, and a fastening bolt 91 for connecting the motor casing 64 and the speed reducer casing 75. A linear expansion coefficient of the fastening bolt 92 is smaller than a linear expansion coefficient of the motor casing 64 and is larger than a linear expansion coefficient of the speed reducer casing 75.

## Description

### Technical Field

The present invention relates to a power transmission device.

### Background Art

In the related art, a power transmission device including a motor and a speed reducer is known (for example, see PTL 1). In this type of power transmission device, in general, an aluminum alloy is used for a motor casing for weight saving, a steel material (carbon steel for mechanical structures, alloy steel for mechanical structures, or cast iron) is used for a speed reducer casing, and carbon steel for mechanical structures or alloy steel for mechanical structures is used for a fastening bolt that fastens the motor casing and the speed reducer casing together.

### Citation List

### Patent Literature

[PTL 1] Japanese Unexamined Patent Publication No. 2021-73842

### Summary of Invention

### Technical Problem

In the power transmission device, the temperature rises due to heat generation during operation, and the members expand. In this case, the casing member (motor casing and speed reducer casing) expands more than the fastening bolt due to a difference in linear expansion coefficient between the casing member and the fastening bolt. As a result, there was a possibility that the motor casing may be pressed against a seat surface of the fastening bolt and the casing member may be deformed.

The present invention has been made in view of the above circumstances, and an object of the present invention is to suitably fasten a motor casing and a speed reducer casing together.

### Solution to Problem

According to the present invention, provided is a power transmission device including:
a motor; and
a speed reducer,
in which a motor casing, a speed reducer casing, and a connection member for connecting the motor casing and the speed reducer casing are provided, and
a linear expansion coefficient of the connection member is smaller than a linear expansion coefficient of the motor casing and is larger than a linear expansion coefficient of the speed reducer casing.

### Advantageous Effects of Invention

According to the present invention, it is possible to suitably fasten the motor casing and the speed reducer casing together.

### Brief Description of Drawings

Fig. 1 is a cross-sectional view showing a gear motor according to a first embodiment.
Fig. 2 is a cross-sectional view showing a gear motor according to a second embodiment.

### Description of Embodiments

Hereinafter, embodiments of the present invention will be described in detail with reference to the drawings.

### <1. First Embodiment>

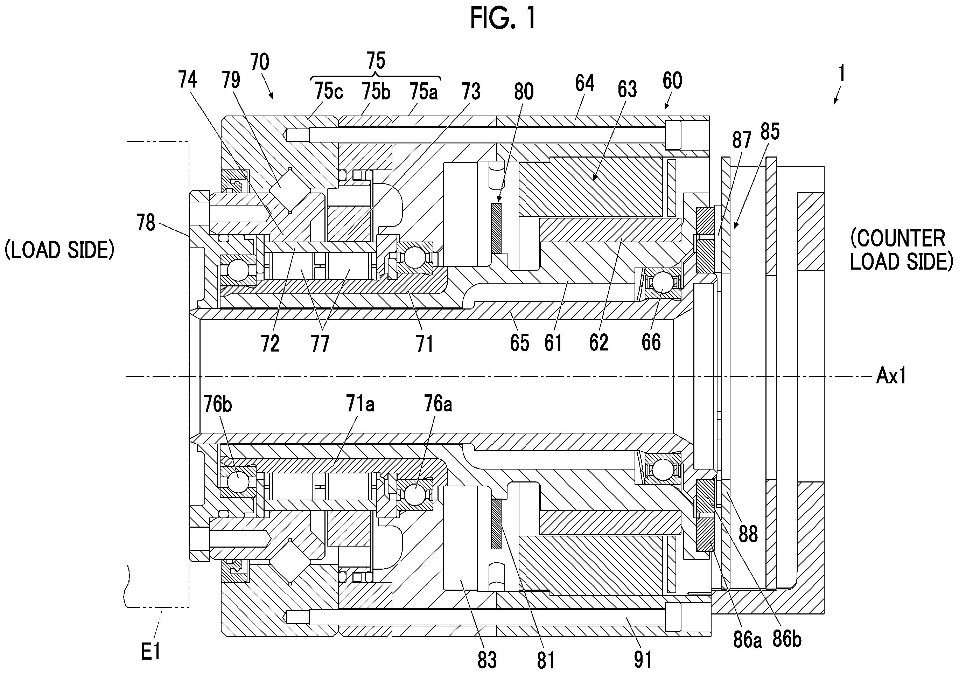

Fig. 1 is a cross-sectional view showing a gear motor 1 according to a first embodiment of the present invention.

The gear motor 1 according to the present embodiment is an example of a power transmission device according to the present invention. Although the use thereof is not particularly limited, the gear motor 1 can be used as a joint gear motor of a cooperative robot that performs work in cooperation with a human, for example.

### [1-1. Configuration of Gear Motor]

Specifically, the gear motor 1 includes a motor 60, a speed reducer 70, a brake 80, and a rotation detection portion 85.

In the description of the first embodiment, a direction along a center axis Ax1 of the gear motor 1 is referred to as an "axial direction", and a radial direction and a circumferential direction of a circle with the center axis Ax1 as a center are referred to as a "radial direction" and a "circumferential direction", respectively. In addition, in the axial direction, a side (left side in Fig. 1) connected to an external driven member E1 is referred to as a "load side", and a side opposite to the load side (right side in Fig. 1) is referred to as a "counter load side".

The motor 60 includes a rotor shaft 61 that rotates around the center axis Ax1, a motor rotor 62, a motor stator 63, and a motor casing 64.

In the present embodiment, the rotor shaft 61 penetrates from the motor 60 to the speed reducer 70.

The motor rotor 62 is externally fitted to the rotor shaft 61 and rotates integrally with the rotor shaft 61. The motor rotor 62 includes a permanent magnet such as a neodymium magnet.

The motor stator 63 is configured by winding a coil around a stator core that is made of a laminated steel plate. The motor stator 63 is disposed concentrically on the outer diameter side (outside in the radial direction) of the motor rotor 62.

The motor casing 64 covers the outer diameter sides of the motor rotor 62 and the motor stator 63. The motor stator 63 is fitted into an inner peripheral surface of the motor casing 64.

In the present embodiment, the speed reducer 70 is a tubular bending meshing type gear device, and includes a wave generator shaft (input shaft) 71 including a wave generator 71a, an external gear 72 that is disposed on the outer diameter side of the wave generator 71a and flexibly deformed by the wave generator 71a, and two internal gears 73 and 74 that mesh with the external gear 72. In addition, the speed reducer 70 includes a speed reducer casing 75 covering an outer peripheral portion of the speed reducer 70, and an output member 78 taking out the decelerated rotation.

The wave generator shaft 71 is externally fitted to the rotor shaft 61. A part of the wave generator shaft 71 forms the wave generator 71a in which the outline of a cross section perpendicular to the center axis Ax1 is non-circular (for example, elliptical). In a part of the wave generator shaft 71 other than the wave generator 71a, the outline of a cross section perpendicular to the center axis Ax1 is circular.

The wave generator shaft 71 is supported by input bearings 76a and 76b (for example, ball bearings) on both sides of the wave generator 71a in the axial direction. One input bearing 76a is fitted into a first speed reducer casing 75a to be described later to rotatably support the wave generator shaft 71, and the other input bearing 76b is fitted into an output member 78 to rotatably support the wave generator shaft 71.

The external gear 72 is supported to be relatively rotatable with the wave generator 71a via a wave generator bearing 77 (for example, roller bearing) disposed between the external gear 72 and the wave generator 71a. The external gear 72 is fitted to the outer diameter side of the wave generator 71a via the wave generator bearing 77 to follow the outer peripheral surface of the wave generator 71a. The external gear 72 is flexible and is flexibly deformed into an elliptical shape to match the wave generator 71a when the wave generator shaft 71 rotates.

The two internal gears 73 and 74 are disposed in parallel in the axial direction. One internal gear 73 is disposed on the counter load side, and the other internal gear 74 is disposed on the load side. The two internal gears 73 and 74 have different numbers of teeth. For example, one internal gear 73 has more teeth than the external gear 72, and the other internal gear 74 has the same number of teeth as the external gear 72.

The speed reducer casing 75 includes a first speed reducer casing 75a, a second speed reducer casing 75b, and a third speed reducer casing 75c that are disposed in parallel in the axial direction.

The first speed reducer casing 75a is disposed closest to the counter load side.

The second speed reducer casing 75b is disposed between the first speed reducer casing 75a and the third speed reducer casing 75c, and also serves as one internal gear 73.

The third speed reducer casing 75c is disposed closest to the load side and the outer diameter side of the internal gear 74, and rotatably supports the internal gear 74 via a main bearing 79 (for example, cross roller bearing). The third speed reducer casing 75c integrally includes an outer ring portion (rolling surface on the outer ring side) of the main bearing 79.

The first speed reducer casing 75a, the second speed reducer casing 75b, and the third speed reducer casing 75c are connected to each other in the axial direction by fastening bolts 91, as will be described later.

The output member 78 is fixed to the internal gear 74 and the driven member E1, and outputs a rotation force transmitted from the internal gear 74 to the driven member E1. A hollow shaft 65 is fitted to an inner peripheral portion of the output member 78. The hollow shaft 65 is disposed closer to the inner diameter side (inside in the radial direction) than the rotor shaft 61, and penetrates from the motor 60 to the speed reducer 70. The hollow shaft 65 is rotatably supported at an end portion on the counter load side by a bearing 66 disposed between the hollow shaft 65 and the rotor shaft 61, and an end portion on the load side is rotatably supported by a main bearing 79 via the output member 78 and the internal gear 74.

The brake 80 is disposed between the motor 60 and the speed reducer 70 in the axial direction. The brake 80 includes a brake rotor 81 that is attached to the rotor shaft 61 and a brake mechanism 83 that brakes the brake rotor 81. The brake mechanism 83 is configured to include, for example, a coil and a spring, and sandwiches the brake rotor 81 between a plurality of friction members by the reaction of the coil and the spring, whereby a braking force acts on the rotor shaft 61.

The rotation detection portion 85 is disposed on the counter load side of the motor 60. The rotation detection portion 85 includes a first rotating portion 86a that rotates integrally with the rotor shaft 61, a second rotating portion 86b that rotates integrally with the hollow shaft 65, a sensor 87 that individually detects rotation quantities of the first rotating portion 86a and the second rotating portion 86b, and an encoder substrate 88 on which the sensor 87 is mounted. The rotation detection portion 85 of the present embodiment is a rotary encoder that outputs the displacement of the rotating portion as a digital signal. However, it may be a resolver that outputs the displacement as an analog signal, or may be any other rotation detector. The rotary encoder may be configured to include an optical detection portion or to include a magnetic detection portion.

### [1-2. Casing Connection Structure and Material thereof]

In the gear motor 1, the motor casing 64 and three speed reducer casings 75 (75a to 75c) are connected to each other by a plurality of fastening bolts 91 arranged in the circumferential direction. The respective fastening bolts 91 are inserted from the counter load side in the axial direction, and fasten the motor casing 64 and the three speed reducer casings 75 together.

Examples of the materials and the linear expansion coefficients (representative values) of the motor casing 64, the speed reducer casing 75, and the fastening bolt 91 are shown in Table I below.

### [Table 1]

**Table I**

| Member | Material | Linear Expansion Coefficient (Representative Value) [×10⁻⁶/°C] |
|---|---|---|
| Motor Casing | Aluminum-Based, Magnesium-Based, or Resin | 23 |
| Speed Reducer Casing | Alloy Steel for Mechanical Structures, Carbon Steel for Mechanical Structures, High Carbon Chromium Bearing Steel, or Cast Iron | 12 |
| Fastening Bolt | Austenitic Stainless Steel | 17 |

Among the materials of the speed reducer casing shown in Table I, the "alloy steel for mechanical structures" is mainly used in a case where the speed reducer casing 75 is formed integrally with the (internal) gear, and in the present embodiment, the "alloy steel for mechanical structures" is a material of the second speed reducer casing 75b that also serves as the internal gear 73. In addition, among the materials of the speed reducer casing 75, the "high carbon chromium bearing steel (so-called bearing steel)" is mainly used in a case where the speed reducer casing 75 is formed integrally with the bearing, and in the present embodiment, the "high carbon chromium bearing steel" is a material of the third speed reducer casing 75c that integrally includes the outer ring portion (rolling surface on the outer ring side) of the main bearing 79. In addition, the "aluminum-based" includes a wide range of aluminum and aluminum alloys, and the "magnesium-based" includes a wide range of magnesium and magnesium alloys.

The materials and the linear expansion coefficients of the casings and the like of the gear motor 1 are not limited to those shown in Table I. The linear expansion coefficient of the fastening bolt 91 may be smaller than the linear expansion coefficient of the motor casing 64 and may be larger than the linear expansion coefficient of the speed reducer casing 75 (at least one of the three). Therefore, as will be described later, the motor casing 64 and the speed reducer casing 75 can be suitably fastened to each other. In addition, the linear expansion coefficient of the fastening bolt 91 may be substantially the same as the linear expansion coefficient of the motor casing 64.

### [1-3. Material of Reduction Mechanism]

Examples of the material and the linear expansion coefficient (representative value) of the speed reducer 70 (reduction mechanism) are shown in Table II below.

### [Table 2]

**Table II**

| Member | Material | Linear Expansion Coefficient (Representative Value) [×10⁻⁶/°C] |
|---|---|---|
| Wave Generator | Titanium-Based | 8 |
| Wave Generator Bearing | High Carbon Chromium Bearing Steel | 12 |
| External Gear | Alloy Steel for Mechanical Structures, Carbon Steel for Mechanical Structures, High Carbon Chromium Bearing Steel, or Cast Iron | 12 |
| Internal Gear | Alloy Steel for Mechanical Structures, Carbon Steel for Mechanical Structures, High Carbon Chromium Bearing Steel, or Cast Iron | 12 |

In Table II, the "wave generator bearing" refers to at least one of a rolling element and a holder (including an inner ring and an outer ring in a case where the inner ring and the outer ring are provided) in the wave generator bearing 77. In addition, the "titanium-based" includes a wide range of titanium and titanium alloys.

The material and the linear expansion coefficient of the reduction mechanism are not limited to those shown in Table II, and the linear expansion coefficient of the wave generator 71a may be smaller than the linear expansion coefficient of the external gear 72. Therefore, as will be described later, it is possible to suppress a reduction in radial gap between the external gear 72 and the internal gears 73 and 74 during operation. Furthermore, the linear expansion coefficient of the wave generator 71a is preferably smaller than the linear expansion coefficient of the wave generator bearing 77, and is more preferably smaller than the linear expansion coefficients of both the internal gears 73 and 74.

### [1-4. Operation of Gear Motor]

In the gear motor 1 of the present embodiment, when the motor 60 is driven and the rotor shaft 61 rotates, the rotation output is input to the wave generator shaft 71 of the speed reducer 70 that is integral with the rotor shaft 61.

In the speed reducer 70, when the wave generator shaft 71 rotates, the motion of the wave generator 71a is transmitted to the external gear 72. In this case, the external gear 72 is restricted to a shape along the outer peripheral surface of the wave generator 71a, and bent into an elliptical shape when viewed in the axial direction. Furthermore, the external gear 72 meshes with the fixed one internal gear 73 in a long shaft portion. Therefore, the external gear 72 does not rotate at the same rotating speed as the wave generator 71a, and the wave generator 71a relatively rotates inside the external gear 72. Further, with this relative rotation, the external gear 72 is flexibly deformed so that a long axis position and a short axis position thereof move in the circumferential direction. A period of the deformation is proportional to a rotation period of the wave generator shaft 71.

When the external gear 72 is flexibly deformed, the long axis position thereof is moved, and thus the position where the external gear 72 and the one internal gear 73 mesh with each other changes in the direction of rotation, and the external gear 72 rotates. Meanwhile, the external gear 72 meshes with the other internal gear 74 as well, and thus the position where the external gear 72 and the other internal gear 74 mesh with each other also changes in the direction of rotation as a result of the rotation of the wave generator shaft 71. Here, when the number of teeth of the other internal gear 74 and the number of teeth of the external gear 72 are the same as each other, the external gear 72 and the other internal gear 74 do not relatively rotate, and the rotating motion of the external gear 72 is reduced at a reduction ratio of 1:1, and is transmitted to the other internal gear 74. Accordingly, the rotating motion of the wave generator shaft 71 is decelerated and transmitted to the internal gear 74 and the output member 78, and the rotating motion is output to the driven member E1.

Here, in the present embodiment, the linear expansion coefficient of the fastening bolt 91 is smaller than the linear expansion coefficient of the motor casing 64 and is larger than the linear expansion coefficient of the speed reducer casing 75. Therefore, it is possible to suitably fasten the motor casing 64 and the speed reducer casing 75 together.

That is, in the related art, the material of a fastening bolt was, for example, alloy steel for mechanical structures or carbon steel for mechanical structures, and its linear expansion coefficient was the same as that of a speed reducer casing (for example, 12 [×10⁻⁶/°C]). Therefore, when the temperature rises due to heat generation of the motor and the speed reducer during operation, the casing member (motor casing (made of an aluminum alloy, for example) and speed reducer casing) expands more in the axial direction than the fastening bolt (for example, alloy steel for mechanical structures) due to their difference in linear expansion coefficient. As a result, there was a possibility that the motor casing may be pressed against a seat surface of the fastening bolt and may collapse and deform.

In this regard, in the present embodiment, as described above, the linear expansion coefficient of the fastening bolt 91 is smaller than the linear expansion coefficient of the motor casing 64 and is larger than the linear expansion coefficient of the speed reducer casing 75. That is, compared to the related art in which the fastening bolt and the speed reducer casing have the same linear expansion coefficient, the difference in amount of thermal expansion between the casing member (motor casing 64 and speed reducer casing 75) and the fastening bolt 91 is small. Therefore, it is possible to reduce the force with which the motor casing 64 is pressed against the seat surface of the fastening bolt 91 when the members expand due to heat generation. Therefore, it is possible to reduce the possibility that the motor casing 64 may be pressed against the fastening bolt 91 and may collapse and deform.

In addition, in the present embodiment, the linear expansion coefficient of the wave generator 71a is smaller than the linear expansion coefficient of the external gear 72. Therefore, it is possible to suppress a reduction in radial gap between the external gear 72 and the internal gears 73 and 74 during operation.

That is, in the related art, the material of a wave generator was, for example, alloy steel for mechanical structures or carbon steel for mechanical structures, and its linear expansion coefficient was the same as that of an external gear (for example, 12 [×10⁻⁶/°C]). In addition, the greater the inner diameter, the larger the temperature rise during operation in a speed reducer. Therefore, the amount of thermal expansion of the wave generator on the inner diameter side was larger than that of the external gear on the outer diameter side. As a result, there was a possibility that a radial gap between the external gear and the internal gear may be reduced during operation. The reduction of the radial gap may cause an increase in sliding friction, leading to a deterioration in transmission efficiency or a further temperature rise.

In this regard, in the present embodiment, as described above, the linear expansion coefficient of the wave generator 71a on the inner diameter side is smaller than the linear expansion coefficient of the external gear 72 on the outer diameter side. Therefore, compared to the related art in which the wave generator and the external gear have the same linear expansion coefficient, the difference in amount of thermal expansion between the wave generator 71a and the external gear 72 can be reduced. Accordingly, it is possible to suppress a reduction in radial gap between the external gear 72 and the internal gears 73 and 74 during operation.

### [1-5. Technical Effects of First Embodiment]

As described above, according to the first embodiment, the linear expansion coefficient of the fastening bolt 91 that connects the motor casing 64 and the speed reducer casing 75 is smaller than the linear expansion coefficient of the motor casing 64 and is larger than the linear expansion coefficient of the speed reducer casing 75.

Therefore, compared to the related art in which the fastening bolt and the speed reducer casing have the same linear expansion coefficient, the difference in amount of thermal expansion between the casing member (motor casing 64 and speed reducer casing 75) and the fastening bolt 91 is small. Therefore, it is possible to reduce the force with which the motor casing 64 is pressed against the seat surface of the fastening bolt 91 when the members expand due to heat generation. Therefore, it is possible to reduce the possibility that the motor casing 64 may be pressed against the fastening bolt 91 and may deform. As a result, it is possible to suitably fasten the motor casing 64 and the speed reducer casing 75 together.

In addition, according to the first embodiment, the linear expansion coefficient of the wave generator 71a is smaller than the linear expansion coefficient of the external gear 72 disposed on the outer diameter side of the wave generator 71a.

Therefore, compared to the related art in which the wave generator and the external gear have the same linear expansion coefficient, the difference in amount of thermal expansion between the wave generator 71a and the external gear 72 can be reduced. Accordingly, it is possible to suppress a reduction in radial gap between the external gear 72 and the internal gears 73 and 74 during operation.

In addition, according to the first embodiment, the linear expansion coefficient of the wave generator 71a is smaller than the linear expansion coefficient of the wave generator bearing 77 disposed between the wave generator 71a and the external gear 72.

Therefore, compared to the related art in which the wave generator and the wave generator bearing have the same linear expansion coefficient, the difference in amount of thermal expansion between the wave generator 71a and the wave generator bearing 77 can be reduced. Therefore, it is possible to suppress a reduction in radial gap between the wave generator bearing 77 and the external gear 72 during operation, and it is possible to further suppress a reduction in radial gap between the external gear 72 and the internal gears 73 and 74.

### <2. Second Embodiment>

Next, a second embodiment of the present invention will be described.

### [2-1. Configuration of Gear Motor]

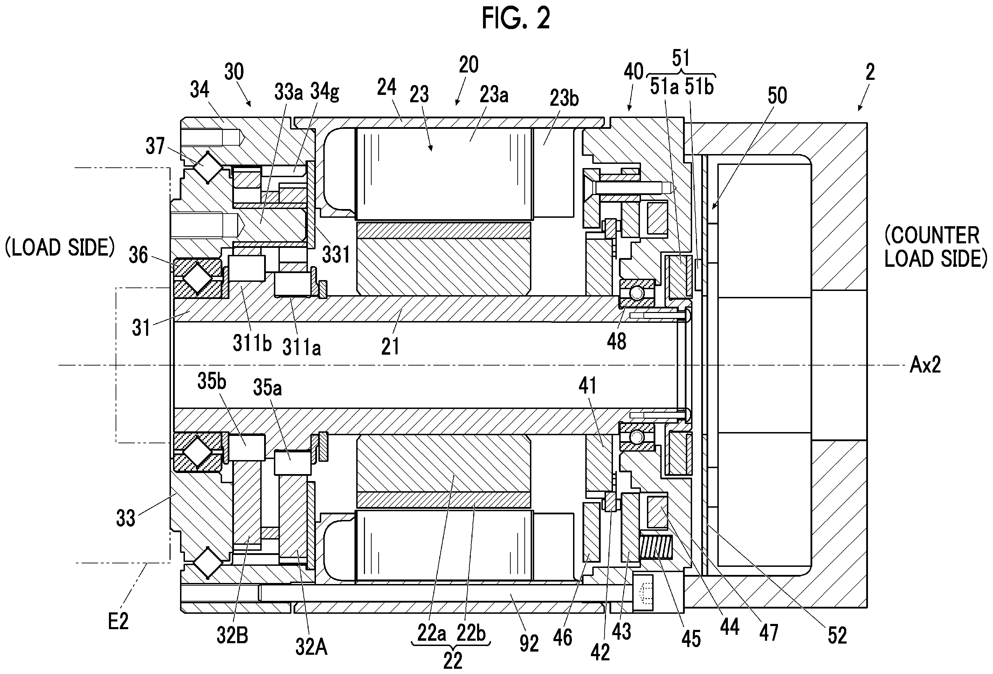

Fig. 2 is a cross-sectional view showing a gear motor 2 according to a second embodiment of the present invention.

The gear motor 2 according to the present embodiment is an example of the power transmission device according to the present invention, and differs from the gear motor 1 according to the first embodiment mainly in that the speed reducer is not a bending meshing type gear device, but an eccentric oscillation type gear device.

Specifically, as shown in Fig. 2, the gear motor 2 includes a motor 20, a speed reducer 30, a brake 40, and a rotation detection portion 50. The speed reducer 30, the motor 20, the brake 40, and the rotation detection portion 50 are arranged in this order along a center axis Ax2 of the gear motor 2.

In the description of the second embodiment, a direction along the center axis Ax2 of the gear motor 2 is referred to as an "axial direction", and a radial direction and a circumferential direction of a circle with the center axis Ax2 as a center are referred to as a "radial direction" and a "circumferential direction", respectively. In addition, in the axial direction, a side (left side in Fig. 2) connected to an external driven member E2 is referred to as a "load side", and a side opposite to the load side (right side in Fig. 2) is referred to as a "counter load side".

The motor 20 includes a rotor shaft 21 that rotates around the center axis Ax2, a motor rotor 22, a motor stator 23, and a motor casing 24.

In the present embodiment, the rotor shaft 21 penetrates from the speed reducer 30 to the brake 40. As will be described later, the rotor shaft 21 is rotatably supported by a first bearing 36 provided in the speed reducer 30 and a second bearing 48 provided in the brake 40.

The motor rotor 22 is externally fitted to the rotor shaft 21 and rotates integrally with the rotor shaft 21. The motor rotor 22 includes a rotor yoke 22a and a rotor magnet 22b. The rotor yoke 22a is made of a nonmagnetic body and is fitted and fixed to an outer peripheral surface of the rotor shaft 21. The rotor magnet 22b is a permanent magnet such as a neodymium magnet, and a plurality of rotor magnets 22b corresponding to a predetermined number of poles are attached to an outer peripheral surface of the rotor yoke 22a.

The motor stator 23 is configured by winding a coil 23b around a stator core 23a that is made of a laminated steel plate. The motor stator 23 is disposed concentrically on the outer diameter side of the motor rotor 22.

The motor casing 24 covers the outer diameter sides of the motor rotor 22 and the motor stator 23. The motor stator 23 is held in a state in which the stator core 23a of the motor stator 23 is internally fitted.

In addition, the motor casing 24 is not particularly limited, but is made of an aluminum-based material primarily for the purposes of weight saving and improvement of cooling performance.

The type of the motor 20 is not particularly limited. For example, the motor 20 may be an induction motor, instead of a permanent magnet type motor.

In the present embodiment, the speed reducer 30 is a center crank type eccentric oscillating speed reducer and is disposed on the load side of the motor 20. Specifically, the speed reducer 30 includes an eccentric body shaft 31, external gears 32A and 32B, an output shaft 33, and a speed reducer casing 34.

The eccentric body shaft 31 is an input shaft of the speed reducer 30 having a hollow structure. In the present embodiment, the eccentric body shaft 31 is integrally formed of a single material with the rotor shaft 21 of the motor 20. However, the eccentric body shaft 31 and the rotor shaft 21 may be separate bodies, and in this case, a configuration in which the eccentric body shaft 31 and the rotor shaft 21 are connected by, for example, a spline or a key structure to transmit rotation may be adopted.

The eccentric body shaft 31 is provided with a plurality of (two) eccentric bodies 311a and 311b.

The external gears 32A and 32B have a plurality of inner pin holes spaced apart in the circumferential direction at positions offset from the center, and a center through-hole into which the eccentric body shaft 31 is inserted.

The external gears 32A and 32B are supported rotatably with respect to the eccentric bodies 311a and 311b by the eccentric body bearings 35a and 35b disposed between the external gear 32A and the eccentric body 311a and between the external gear 32B and the eccentric body 311b, respectively, and oscillate by the rotation of the eccentric bodies 311a and 311b.

The output shaft 33 is disposed on the outer diameter side of the eccentric body shaft 31 and on the load side of the external gears 32A and 32B, and is fixed to the driven member E2. The output shaft 33 includes a plurality of inner pins 33a formed to bulge into a pin shape toward the counter load side. The inner pins 33a are inserted into the inner pin holes of the external gears 32A and 32B. A plate 331 fixed to the speed reducer casing 34 is disposed on the counter load side of the inner pins 33a.

The output shaft 33 rotatably supports the eccentric body shaft 31 by the first bearing 36 disposed between the eccentric body shaft 31 and the output shaft 33. The first bearing 36 is, for example, a cross roller bearing.

In addition, the output shaft 33 is made of a metal material such as a steel material, for example.

The speed reducer casing 34 is disposed on the outer diameter sides of the external gears 32A and 32B and the output shaft 33. The speed reducer casing 34 is fixed to the motor casing 24 of the motor 20.

An internal gear 34g is provided in an inner peripheral portion of the speed reducer casing 34. The internal gear 34g includes a plurality of outer pins serving as internal teeth, and internally meshes with the external gears 32A and 32B.

The speed reducer casing 34 rotatably supports the output shaft 33 by a main bearing 37 disposed between the speed reducer casing 34 and the output shaft 33. The main bearing 37 is a cross roller bearing. In the present embodiment, an inner ring (rolling surface) is integrally provided in an outer peripheral portion of the output shaft 33, and an outer ring (rolling surface) is integrally provided in an inner peripheral portion of the speed reducer casing 34.

In addition, similarly to the output shaft 33, the speed reducer casing 34 is made of a metal material such as a steel material, for example.

The brake 40 brakes the rotation of the rotor shaft 21 (eccentric body shaft 31), and is disposed on the counter load side of the motor 20.

The brake 40 includes a hub member 41 that is fixed to the rotor shaft 21 so that the relative rotation is restricted, a disk-shaped rotor 42 spline-fitted to the hub member 41, an armature 43 that is displaceable toward the rotor 42, an electromagnetic coil 44 that drives the armature 43, a spring material 45 that returns the armature 43 to an original position, a plate 46 that is opposed to the rotor 42 on a side opposite to the armature 43, and a frame 47 that holds the electromagnetic coil 44, the plate 46, and the like. A lining (abrasive material) is adhered to each of both surfaces of the rotor 42 opposed to the plate 46 and the armature 43.

The frame 47 is fixed to the motor casing 24 of the motor 20. In the present embodiment, the speed reducer casing 34 of the speed reducer 30, the motor casing 24 of the motor 20, and the frame 47 are collectively fastened by a fastening bolt 92.

The frame 47 rotatably supports the rotor shaft 21 by the second bearing 48 disposed between the frame 47 and the rotor shaft 21. The second bearing 48 is provided between the motor rotor 22 and a rotation detector 51. Specifically, the second bearing 48 is provided between the hub member 41 of the brake 40 and the rotation detector 51. The second bearing 48 is a ball bearing in the present embodiment. The bearing type of the second bearing 48 is not particularly limited, and may be, for example, a roller bearing such as a cross roller bearing. In addition, the second bearing 48 is more preferably disposed near a rotating portion 51a of the rotation detection portion 50 to be described later from the viewpoint of improving the detection accuracy of the rotation detection portion 50.

In addition, the frame 47 is not particularly limited, but is made of an aluminum alloy or a resin primarily for the purposes of weight saving.

In the brake 40, by the reaction of the electromagnetic coil 44 or the spring material 45, the rotor 42 is sandwiched between the armature 43 and the plate 46 via a lining, and thus a braking force is applied to the rotor shaft 21 (eccentric body shaft 31). In addition, by the reaction of the spring material 45 or the electromagnetic coil 44, the force with which the armature 43 and the plate 46 sandwich the rotor 42 therebetween is released, and thus the braking force acting on the rotor shaft 21 (eccentric body shaft 31) is released.

The rotation detection portion 50 is disposed on the counter load side of the brake 40. The rotation detection portion 50 includes a rotation detector 51 that detects the rotation of the rotor shaft 21 (eccentric body shaft 31) and an encoder substrate 52 on which a detection circuit thereof is mounted.

The rotation detector 51 includes a rotating portion 51a that rotates integrally with the rotor shaft 21, and a sensor 51b that is disposed to be opposed to the counter load side of the rotating portion 51a and detects a rotation quantity of the rotating portion 51a. The rotation detector 51 is, for example, a rotary encoder that outputs the displacement of the rotation of the rotating portion as a digital signal. However, it may be a resolver that outputs the displacement as an analog signal, or may be any other rotation detector. The rotary encoder may be configured to include an optical detection portion or to include a magnetic detection portion.

The encoder substrate 52 is equipped with the sensor 51b, and detects and outputs the rotation of the rotor shaft 21 (eccentric body shaft 31) to a circuit portion including a drive circuit of the motor 20.

### [2-2. Casing Connection Structure and Material thereof]

In the gear motor 2, the motor casing 24, the speed reducer casing 34, and the frame 47 are connected to each other by a plurality of fastening bolts 92 arranged in the circumferential direction. The respective fastening bolts 92 are inserted from the counter load side in the axial direction, and fasten the frame 47, the motor casing 24, and the speed reducer casing 34 together.

The fastening bolts 92 may connect at least the motor casing 24 and the speed reducer casing 34. In this case, the frame 47 may be connected to the motor casing 24 by a connection member different from the fastening bolts 92.

The materials and the linear expansion coefficients of the motor casing 24, the speed reducer casing 34, and the fastening bolt 92 are similar to those of the motor casing 64, the speed reducer casing 75, and the fastening bolt 91 in the first embodiment.

That is, the linear expansion coefficient of the fastening bolt 92 may be smaller than the linear expansion coefficient of the motor casing 24 and may be larger than the linear expansion coefficient of the speed reducer casing 34. Therefore, as will be described later, the motor casing 24 and the speed reducer casing 34 can be suitably fastened to each other.

### [2-3. Operation of Gear Motor]

In the gear motor 2 of the present embodiment, when the motor 20 is driven and the rotor shaft 21 rotates, the rotation output is input to the eccentric body shaft 31 of the speed reducer 30 that is integral with the rotor shaft 21.

In the speed reducer 30, the eccentric bodies 311a and 311b rotate inside the external gears 32A and 32B as the eccentric body shaft 31 rotates, and thus the external gears 32A and 32B oscillate in different phases. Of the external gears 32A and 32B, the outer teeth farthest from the center axis Ax2 mesh with the internal gear 34g by the oscillation, and the meshing position changes in the circumferential direction with the oscillation. Specifically, each time the eccentric body shaft 31 rotates once, the meshing position between the internal gear 34g and the external gears 32A and 32B makes one round in the circumferential direction. The external gears 32A and 32B and the internal gear 34g have a difference in number of teeth, and the external gears 32A and 32B rotate by the above-described difference in number of teeth each time the meshing position with the internal gear 34g makes one round. The rotation is transmitted to the output shaft 33 via the inner pins 33a. Therefore, the rotating motion of the eccentric body shaft 31 is decelerated and taken out from the driven member E2 connected to the output shaft 33.

Here, in the present embodiment, the linear expansion coefficient of the fastening bolt 92 is smaller than the linear expansion coefficient of the motor casing 24 and is larger than the linear expansion coefficient of the speed reducer casing 34. Therefore, it is possible to suitably fasten the motor casing 24 and the speed reducer casing 34 together.

That is, in the related art, the material of a fastening bolt was, for example, alloy steel for mechanical structures or carbon steel for mechanical structures, and its linear expansion coefficient was the same as that of a speed reducer casing (for example, 12 [×10⁻⁶/°C]). Therefore, when the temperature rises due to heat generation of the motor and the speed reducer during operation, the casing member (motor casing (made of an aluminum alloy, for example) and speed reducer casing) expands more in the axial direction than the fastening bolt (for example, alloy steel for mechanical structures) due to their difference in linear expansion coefficient. As a result, there was a possibility that the motor casing may be pressed against a seat surface of the fastening bolt and may collapse and deform.

In this regard, in the present embodiment, as described above, the linear expansion coefficient of the fastening bolt 92 is smaller than the linear expansion coefficient of the motor casing 24 and is larger than the linear expansion coefficient of the speed reducer casing 34. That is, compared to the related art in which the fastening bolt and the speed reducer casing have the same linear expansion coefficient, the difference in amount of thermal expansion between the casing member (motor casing 24 and speed reducer casing 34) and the fastening bolt 92 is reduced.

### [2-4. Technical Effects of Second Embodiment]

As described above, according to the second embodiment, similar effects to those of the first embodiment are obtained.

That is, the linear expansion coefficient of the fastening bolt 92 that connects the motor casing 24 and the speed reducer casing 34 is smaller than the linear expansion coefficient of the motor casing 24 and is larger than the linear expansion coefficient of the speed reducer casing 34.

Therefore, compared to the related art in which the fastening bolt and the speed reducer casing have the same linear expansion coefficient, the difference in amount of thermal expansion between the casing member (motor casing 24 and speed reducer casing 34) and the fastening bolt 92 is reduced. Accordingly, it is possible to suitably fasten the motor casing 24 and the speed reducer casing 34 together.

### <3. Others>

The embodiments of the present invention have been described above, but the present invention is not limited to the above-described embodiments.

For example, in the above-described embodiments, the fastening bolt has been described as a connection member for connecting the motor casing and the speed reducer casing. However, the connection member is not limited to the bolt, and may be a pin or a rivet, for example.

In addition, in the above-described embodiments, as an example of the speed reducer according to the present invention, a tubular bending meshing type gear device or a center crank type eccentric oscillating gear device has been described. However, the speed reducer according to the present invention is not particularly limited as long as it transmits power. For example, the speed reducer may be a cup type or silk hat side bending meshing type gear device, a distributed eccentric oscillating gear device, or a simple planetary gear device. Alternatively, the speed reducer may be a gear device such as a parallel shaft speed reducer or a perpendicular speed reducer, or a traction drive.

Details in the above-described respective embodiments can be appropriately changed within the scope not departing from the gist of the invention.

### Industrial Applicability

As described above, the present invention is useful for suitably fastening a motor casing and a speed reducer casing together.

### Reference Signs List

1, 2 Gear motor (power transmission device)
20 Motor
21 Rotor shaft
24 Motor casing
30 Speed reducer
34 Speed reducer casing
37 Main bearing (bearing)
40 Brake
50 Rotation detection portion
60 Motor
61 Rotor shaft
64 Motor casing
70 Speed reducer
71 Wave generator shaft
71a Wave generator
72 External gear
73 Internal gear
74 Internal gear
75 Speed reducer casing
75a First speed reducer casing
75b Second speed reducer casing
75c Third speed reducer casing
77 Wave generator bearing
78 Output member
79 Main bearing (bearing)
80 Brake
85 Rotation detection portion
91, 92 Fastening bolt (connection member)
Ax1, Ax2 Center axis
E1, E2 Driven member

## Claims

1. A power transmission device comprising:
a motor; and
a speed reducer,
wherein a motor casing, a speed reducer casing, and a connection member for connecting the motor casing and the speed reducer casing are provided, and
a linear expansion coefficient of the connection member is smaller than a linear expansion coefficient of the motor casing and is larger than a linear expansion coefficient of the speed reducer casing.

2. The power transmission device according to claim 1,
wherein the motor casing is made of an aluminum-based material,
the speed reducer casing is made of alloy steel for mechanical structures, carbon steel for mechanical structures, high carbon chromium bearing steel, or cast iron, and
the connection member is made of austenitic stainless steel.

3. The power transmission device according to claim 1,
wherein the speed reducer casing integrally includes a rolling surface of a bearing.

4. The power transmission device according to claim 1,
wherein the speed reducer is a bending meshing type gear device including a wave generator, an external gear that is disposed outside the wave generator in a radial direction and flexibly deformed by the wave generator, and an internal gear that meshes with the external gear, and
a linear expansion coefficient of the wave generator is smaller than a linear expansion coefficient of the external gear.

5. The power transmission device according to claim 4,
wherein the wave generator is made of a titanium-based material, and
the external gear is made of alloy steel for mechanical structures, carbon steel for mechanical structures, high carbon chromium bearing steel, or cast iron.

6. The power transmission device according to claim 4,
wherein a wave generator bearing is disposed between the wave generator and the external gear, and
the linear expansion coefficient of the wave generator is smaller than a linear expansion coefficient of the wave generator bearing.
